# EUROPEAN PATENT SPECIFICATION

(11) **EP 2 320 442 B1**
(45) Date of publication and mention of the grant of the patent: **12.12.2012**
(21) Application number: 10161210.9
(22) Date of filing: 27.04.2010
(51) Int. Cl.: H01G 9/20, H01M 14/00

(54) **Photoelectric Device**
Fotoelektrische Vorrichtung
Dispositif photoélectrique

(30) Priority: 05.11.2009 US 258529 P; 23.04.2010 US 766358
(43) Date of publication of application: 11.05.2011
(73) Proprietor: Samsung SDI Co., Ltd., Gyeonggi-do (KR)
(72) Inventor: Yang, Nam-Choul, Gyeonggi-do (KR); Hur, Sang-Yeol, Gyeonggi-do (KR); Lee, Jong-Ki, Gyeonggi-do (KR)
(74) Representative: Walaski, Jan Filip

(56) References cited:
- EP-A2- 1 020 881
- EP-A2- 1 137 022
- JP-A- 2006 107 892
- JP-A- 2007 265 775

## Description

The present invention relates to a photoelectric device, and more particularly, to a photoelectric device that may effectively prevent an electrolyte from leaking and have a high durability.

Extensive research has recently been conducted on photoelectric devices that convert light into electric energy. From among such devices, solar cells have attracted much attention as alternative energy sources to fossil fuels.

As research on solar cells having various working principles has been continuously conducted, wafer-based crystalline silicon solar cells using a p-n semiconductor junction have appeared to be the most prevalent ones. However, the manufacturing costs of wafer-based crystalline silicon solar cells are high because they are formed of a high purity semiconductor material.

Unlike silicon solar cells, dye-sensitized solar cells include a photosensitive dye that receives visible light and generates excited electrons, a semiconductor material that receives the excited electrons, and an electrolyte that reacts with electrons returning from an external circuit. Since dye-sensitized solar cells have much higher photoelectric conversion efficiency than other general solar cells, the dye-sensitized solar cells are considered as the next generation solar cells.

One or more embodiments of the present invention include a photoelectric device that may effectively prevent an electrolyte from leaking and have high durability.

According to the present invention, there is provided a photoelectric device comprising a substrate, a photoelectrode on the substrate, the photoelectrode comprising a transparent conductive layer and a plurality of electrode fingers spaced apart across the transparent conductive layer, a protective layer covering the electrode fingers in a sealing region and in a photoelectric conversion region and a sealing layer on the protective layer in the sealing region, wherein the protective layer is arranged in the sealing region to cover the electrode fingers and the transparent conductive layer between the electrode fingers to form a substantially flat surface for receiving the sealing layer.

The protective layer may be arranged in the photoelectric conversion region to cover each of the electrode fingers such that the electrode fingers and the protective layer over each of the fingers provide a plurality of protrusions on the transparent conductive layer. The protective layer may be a continuous layer covering the electrode fingers in the photoelectric conversion region.

The protective layer may be arranged in the photoelectric conversion region to discontinuously cover each of the electrode fingers such that the transparent conductive layer is exposed between the electrode fingers.

The sealing layer may be arranged around a periphery of the photoelectric conversion region.

The photoelectric device may further comprise a semiconductor layer over the protective layer in the photoelectric conversion region. The semiconductor layer may include a photosensitive dye.

The photoelectric device may further comprise a second substrate facing the first substrate, wherein the sealing layer is arranged to seal an electrolyte between the substrates.

The second substrate may include a counter electrode, the counter electrode comprising a further transparent conductive layer, a catalyst layer on the transparent conductive layer and counter electrode fingers on the catalyst layer.

The photoelectric device may comprise a further protective layer over the counter electrode fingers, wherein the further protective layer is arranged to cover each of the counter electrode fingers in a photoelectric conversion region and in a sealing region, wherein the further protective layer is arranged in the sealing region to cover the counter electrode fingers and the catalyst layer between the counter electrode fingers to form a substantially flat surface for receiving the sealing layer.

The further protective layer may be arranged in the photoelectric conversion region to cover the counter electrode fingers with a continuous film such that the counter electrode fingers and the further protective layer over each of the counter electrode fingers provide a plurality of protrusions on the catalyst layer.

The further protective layer may be arranged in the photoelectric conversion region to cover the counter electrode fingers discontinuously such that the catalyst layer is exposed between the counter electrode fingers.

The electrode fingers may be connected to a common electrode that extends in a direction that is substantially perpendicular to the direction in which the electrode fingers extend. The common electrode may be arranged in a peripheral region on a side of the sealing layer opposite the photoelectric conversion region and may extend into the sealing region. A terminal portion of the common electrode may be exposed in the peripheral region to contact an external apparatus.

Each of the first and second substrates may be transparent.

According to the present invention, a photoelectric device may effectively prevent an electrolyte from leaking and have high durability. In detail, a protective layer covering grid patterns that are spaced apart from one another at an interval of an electrode pitch is successively formed along a sealing area, so that an even supporting surface of a sealing member can be obtained by covering steps between the grid patterns, thereby increasing a sealing performance of the sealing member.

Exemplary embodiments of the present invention will now be described by way of example with reference to the accompanying drawings, in which:
FIG. 1 is an exploded perspective view of a photoelectric device according to an embodiment of the present invention.
FIG. 2 is a cross-sectional view taken along a line II-II of FIG. 1.
FIG. 3 is a perspective view illustrating a sealing structure of a photoelectric device, according to an embodiment of the present invention.
FIG. 4 is a plane view illustrating a sealing structure of the photoelectric device.
FIG. 5 is a cross-sectional view taken along a line V-V of FIG. 4.
FIG. 6 is a cross-sectional view of a photoelectric device, according to a comparative example.

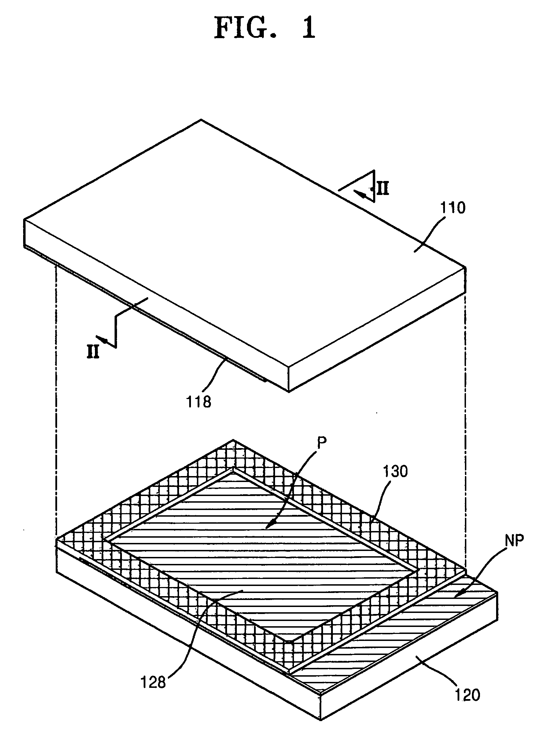

FIG. 1 is an exploded perspective view of a photoelectric device according to an embodiment of the present invention. Referring to FIG. 1, a light receiving substrate 110 on which a first functional layer 118 is formed and a counter substrate 120 on which a second functional layer 128 is formed face each other. A sealing member 130 is disposed between the light receiving substrate 110 and the counter substrate 120 along edges of the two substrates to attach them to each other. Then, an electrolyte (not shown) may be injected into the photoelectric device through an inlet (not shown). The sealing member 130 is used to seal the electrolyte so that the electrolyte does not leak to the outside, and defines a photoelectric conversion area P formed inside the photoelectric device and a peripheral area NP formed outside the photoelectric device.

For example, the functional layers 118 and 128 respectively formed on the light receiving substrate 110 and the counter substrate 120 include a semiconductor layer for generating electrons excited by irradiated light and electrodes for collecting and discharging the generated electrons. For example, a part of the electrode structure consisting of the functional layers 118 and 128 may extend to the outside of the sealing member 130 toward the peripheral area NP to electrically contact with an external circuit.

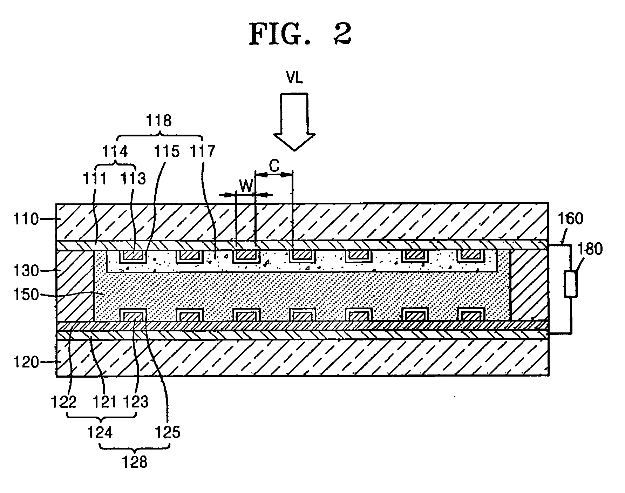

FIG. 2 is a cross-sectional view taken along a line II-II of FIG. 1. Referring to FIG. 2, the light receiving substrate 110 on which the photoelectrode 114 is formed and the counter substrate 120 on which the counter electrode 124 is formed face each other. A semiconductor layer 117 absorbing a photosensitive dye that is excited by light VL is formed on the photoelectrode 114. An electrolyte 150 is filled between the semiconductor layer 117 and the counter electrode 124. For example, the photoelectrode 114 and the semiconductor layer 117 correspond to the functional layer 118 adjacent to the light receiving substrate 110, and the counter electrode 124 correspond to the functional layer 128 adjacent to the counter substrate 120.

The light receiving substrate 110 and the counter substrate 120 are attached to each other using the sealing member 130 so that a predetermined interval is formed therebetween. The sealing member 130 is formed to surround and seal the electrolyte 150 so that the electrolyte 150 does not leak to the outside.

The photoelectrode 114 and the counter electrode 124 are electrically connected to each other using a wire 160 through an external circuit 180. In a module in which a plurality of photoelectric devices are connected in series or in parallel, the photoelectrode 114 and the counter electrode 124 of the photoelectric device may be connected to each other in series or in parallel, and both ends of connected portions may be connected to the external circuit 180.

The light receiving substrate 110 may be formed of a transparent material, for example, a material having a high light transmittance. For example, the light receiving substrate 110 may be a glass substrate or a resin film substrate. Since a resin film usually has flexibility, the resin film may be applied to devices requiring flexibility.

The photoelectrode 114 may include a transparent conductive layer 111 and a grid pattern 113 formed on the transparent conductive layer 111. The grid pattern is also referred to as a pattern of electrode fingers, or a comb electrode pattern. The transparent conductive layer 111 may be formed of a material having transparency and electrical conductivity, for example, a transparent conducting oxide (TCO) such as indium tin oxide (ITO), fluorine tin oxide (FTO), or antimony-doped tin oxide (ATO). The grid pattern 113 is used to reduce the electrical resistance of the photoelectrode 114, and functions as a wire that collects electrons generated by photoelectric conversion and provides a current path having a low resistance. For example, the grid pattern 113 may be formed of a metal material having a high electrical conductivity, such as gold (Au), silver (Ag), or aluminum (Al), and may be patterned in a mesh pattern or a finger pattern.

The photoelectrode 114 functions as a negative electrode of the photoelectric device and may have a high aperture ratio. Since light VL incident through the photoelectrode 114 excites the photosensitive dye absorbed into the semiconductor layer 117, the photoelectric conversion efficiency may be improved by increasing the amount of incident light VL.

A protective layer 115 may be further formed on an outer surface of the grid pattern 113. The protective layer 115 prevents the grid pattern 113 from being damaged, for example, from being eroded, when the grid pattern 113 contacts and reacts with the electrolyte 150. The protective layer 115 may be formed of a material that does not react with the electrolyte 150, for example, a curable resin material.

The semiconductor layer 117 may be formed of a general semiconductor material, for example, a metal oxide such as an oxide of cadmium (Cd), zinc (Zn), indium (In), lead (Pb), molybdenum (Mo), tungsten (W), antimony (Sb), titanium (Ti), silver (Ag), manganese (Mn), tin (Sn), zirconium (Zr), strontium (Sr), gallium (Ga), silicon (Si), or chromium (Cr). The semiconductor layer 117 may increase the photoelectric conversion efficiency by absorbing the photosensitive dye. For example, the semiconductor layer 117 may be formed by coating a paste of semiconductor particles having a particle diameter of 5 to 1000 nm on the light receiving substrate 110 on which the photoelectrode 114 is formed and applying heat and pressure to a resultant structure.

The photosensitive dye absorbed into the semiconductor layer 117 absorbs light VL passing through the light receiving substrate 110, so that electrons of the photosensitive dye are excited from a ground state. The excited electrons are transferred to a conduction band of the semiconductor layer 117 through electrical contact between the photosensitive dye and the semiconductor layer 117, to the semiconductor layer 117, and to the photoelectrode 114, and are discharged to the outside through the photoelectrode 114, thereby forming a driving current for driving the external circuit 180.

For example, the photosensitive dye absorbed into the semiconductor layer 117 may absorb light VL and excite electrons so as to allow the excited electrons to be rapidly moved to the semiconductor layer 117. The photosensitive dye may be any one of liquid type, semi-solid type, and solid type photosensitive dyes. For example, the photosensitive dye absorbed into the semiconductor layer 117 may be a ruthenium-based photosensitive dye. The semiconductor layer 117 absorbing the photosensitive dye may be obtained by dipping the light receiving substrate 110 on which the semiconductor layer 117 is formed in a solution including the photosensitive dye.

The electrolyte 150 may be formed of a redox electrolyte including reduced/oxidized (R/O) couples. The electrolyte 150 may be formed of any one of solid type, gel type, and liquid type electrolytes.

The counter substrate 120 facing the light receiving substrate 110 is not necessarily transparent. However, in order to increase photoelectric conversion efficiency, the counter substrate 120 may be formed of a transparent material so as to receive light VL on both sides of the photoelectric device, and may be formed of the same material as that of the light receiving substrate 110. In particular, when the photoelectric device is installed as a building integrated photovoltaic system in a structure, e.g., a window frame, both sides of the photoelectric device may be transparent so that light VL is not blocked and can enter the photoelectric device.

The counter electrode 124 may include a transparent conductive layer 121 and a catalyst layer 122 formed on the transparent conductive layer 121. The transparent conductive layer 121 may be formed of a material having transparency and electrical conductivity, for example, a transparent conductive oxide such as ITO, FTO, or ATO. The catalyst layer 122 may be formed of a reduction catalyzing material for providing electrons to the electrolyte 150, for example, a metal such as platinum (Pt), gold (Au), silver (Ag), copper (Cu), or aluminum (Al), a metal oxide such as a tin oxide, or a carbon-based material such as graphite.

The counter electrode 124 functions as a positive electrode of the photoelectric device, and also as a reduction catalyst for providing electrons to the electrolyte 150. The photosensitive dye absorbed into the semiconductor layer 117 absorbs light VL to excite electrons, and the excited electrons are discharged to the outside of the photoelectric device through the photoelectrode 114. The photosensitive dye losing the electrons receives electrons generated by oxidization of the electrolyte 150 to be reduced again, and the oxidized electrolyte 150 is reduced again by electrons passing through the external circuit 180 and reaching the counter electrode 124, thereby completing the operation of the photoelectric device.

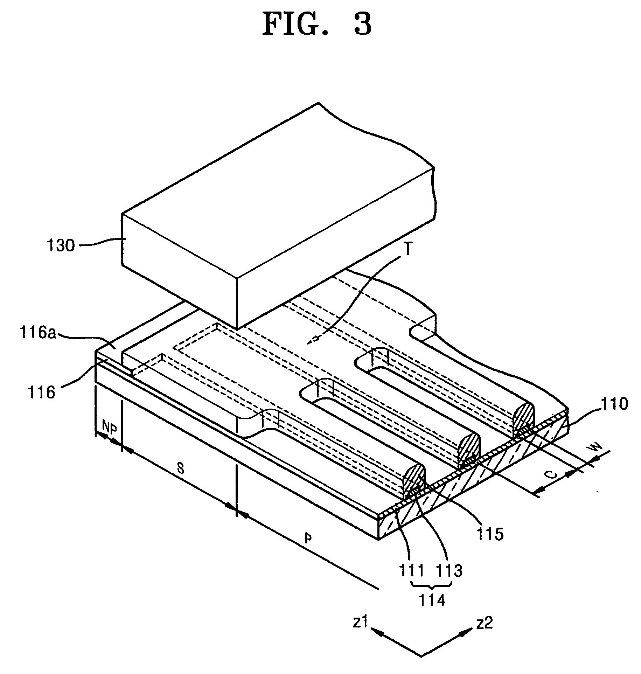

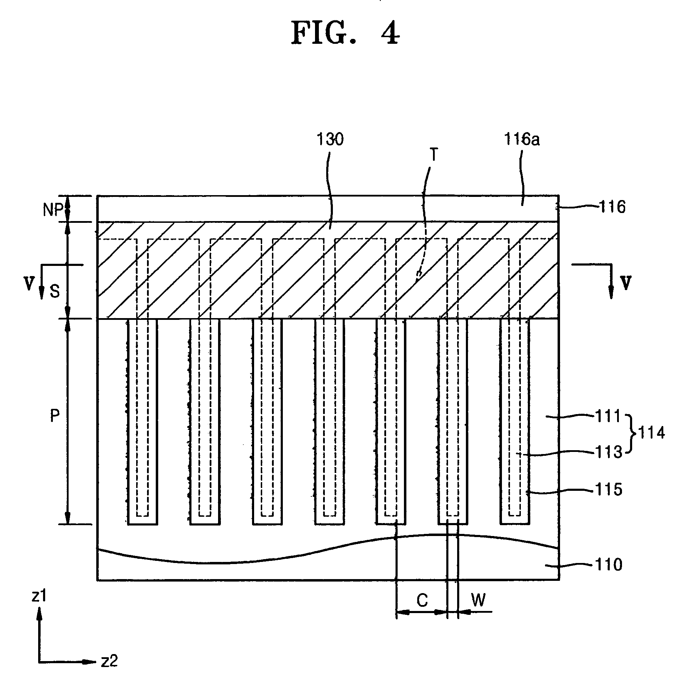

FIG. 3 is a perspective view illustrating a sealing structure of a photoelectric device, according to an embodiment of the present invention. For convenience of description, the protective layer is illustrated to be magnified in FIG. 3. FIG. 4 is a plane view illustrating a sealing structure of the photoelectric device. Referring to FIGS. 3 and 4, a transparent conductive layer 111, grid patterns 113, and a collector wire pattern, or common electrode, 116 are formed on the light receiving substrate 110. The grid patterns 113 are formed on the transparent conductive layer 111 to extend in parallel in a direction z1. The collector wire pattern 116 extends in a direction z2 crossing the grid patterns 113 and collects the grid patterns 113. Reference numerals C and W denote a distance between the adjacent electrodes and a line width of the grid pattern 113, respectively.

Main portions of the grid pattern 113 are disposed in a photoelectric conversion area P and the collector wire pattern 116 is disposed in a peripheral area NP. A sealing area S separates the photoelectric conversion area P and the peripheral area NP. In order to increase an aperture ratio of the photoelectric conversion area P, the opaque collector wire pattern 116 may be formed in the peripheral area NP. The sealing member 130 is formed along the sealing area S.

The grid patterns 113 are covered with the protective layer 115. The protective layer 115 covering the grid pattern 113 may extend on the collector wire pattern 116 to partially cover the collector wire pattern 116. A terminal portion 116a of the collector wire pattern 116 may be exposed by the protective layer 115 to contact an external circuit. In the photoelectric conversion area P, the electrode fingers 113 may be discontinuously covered by the protective layer 115 as shown, or continuously covered by a thin protective layer 115, for example a thin layer of uniform thickness (not shown), so that the transparent conductive layer 111 between the fingers is also covered by the thin protective layer.

The protective layers 115 are successively formed along the sealing area S not to be cut off. That is, the protective layers 115 are formed across the grid patterns 113 spaced apart from one another by a distance C to cover a step T between the grid patterns 113. The protective layer 115 of the sealing area S provides an even supporting surface to the sealing member 130 by covering the step T between the grid patterns 113 and protects the grid pattern 113.

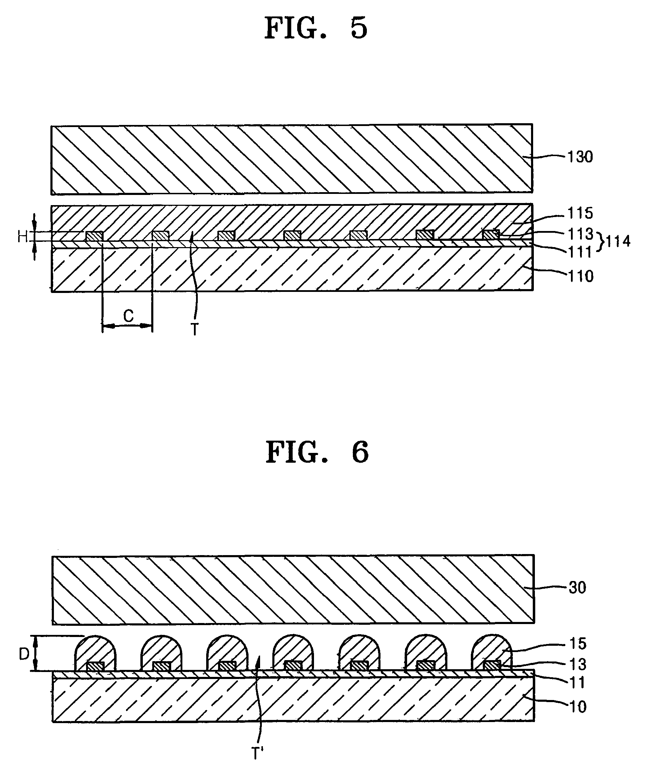

FIG. 5 is a cross-sectional view taken along a line V-V of FIG. 4. For convenience of description, the protective layer is illustrated to be magnified in FIG. 5. Referring to FIG. 5, the plurality of grid patterns 113 are formed on the transparent conductive layer 111 with the distance C therebetween. The protective layers 115 are formed across the grid patterns 113 and cover the transparent conductive layer 111 between the grid patterns 113.

Since the grid pattern 113 has a height H corresponding to a thickness of an electrode on the transparent conductive layer 111, a predetermined step T is formed between the grid pattern 113 and the transparent conductive layer 111. The protective layers 115 are successively formed along the sealing area S, so that the protective layers 115 cover the step T naturally, thereby providing an even upper surface. The sealing member 130 is disposed on the even protective layer 115 so as to ensure a stable supporting surface, thereby increasing reliability and durability of sealing. That is, the sealing member 130 and the protective layer 115 may be closely attached to each other by reducing step-coverage which should be absorbed by the sealing member 130, thereby effectively preventing the electrolyte 150 from leaking.

FIG. 6 is a cross-sectional view of a photoelectric device, according to a comparative example. Referring to FIG. 6, a plurality of grid patterns 13 are disposed on a transparent conductive layer 11, and a protective layer 15 is disposed on the grid pattern 13. Each of the protective layers 15 is formed discontinuously to cover each of the grid patterns 13. That is, the transparent conductive layer 11 formed between the grid patterns 13 is not covered by the protective layer 15 and is thus exposed to the outside. A sealing member 30 penetrates up to an exposed surface of the transparent conductive layer 11 between the protective layers 15, that is, penetrates by a step depth D so as to completely cover a step T' between the protective layers 15, thereby sealing an electrolyte 150. Accordingly, the sealing member 30 requires a high step-coverage, which may restrict use of a specific material and a processing method for the sealing member 30. In particular, if a sealing performance of the sealing member 30 is decreased, the sealing member 30 may be separated from the transparent conductive layer 11, thereby allowing the electrolyte 150 to leak to the outside.

In the structures illustrated in FIGS. 3 and 5, the step T between the grid patterns 113 may be covered by successively forming the protective layers 115 along the sealing area S that extends across the grid patterns 113, and thus an even supporting surface to the sealing member 130 may be provided. The technical details described with reference to FIGS. 3 through 4 may be applied substantially the same for the counter substrate 120 on which the counter electrode 124 is formed. For example, the protective layer 125 is successively formed across the grid patterns 123 so as to provide an even supporting surface to the sealing member 130, thereby increasing a sealing performance of the sealing member 130.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A photoelectric device comprising:
a substrate (110);
a photoelectrode (114) on the substrate (110), the photoelectrode comprising a transparent conductive layer (111) and a plurality of electrode fingers (113) spaced apart across the transparent conductive layer;
a protective layer (115) covering the electrode fingers (113) in a sealing region and in a photoelectric conversion region; and
a sealing layer (130) on the protective layer in the sealing region;
wherein the protective layer (115) is arranged in the sealing region to cover the electrode fingers and the transparent conductive layer between the electrode fingers to form a substantially flat surface for receiving the sealing layer (130).

2. The photoelectric device of claim 1, wherein the protective layer (115) is arranged in the photoelectric conversion region to cover each of the electrode fingers (113) such that the electrode fingers and the protective layer over each of the fingers provide a plurality of protrusions on the transparent conductive layer.

3. The photoelectric device of claim 1 or 2, wherein the protective layer (115) is arranged in the photoelectric conversion region to discontinuously cover each of the electrode fingers such that the transparent conductive layer is exposed between the electrode fingers.

4. The photoelectric device of claim 1, 2 or 3, wherein the sealing layer is arranged around a periphery of the photoelectric conversion region.

5. The photoelectric device according to any one of the preceding claims, further comprising a semiconductor layer (117) over the protective layer (115) in the photoelectric conversion region.

6. The photoelectric device of claim 5, wherein the semiconductor layer includes a photosensitive dye.

7. The photoelectric device of any one of the preceding claims, wherein the substrate (110) comprises a first substrate, further comprising:
a second substrate (120) facing the first substrate, wherein the sealing layer is arranged to seal an electrolyte between the substrates.

8. The photoelectric device of claim 7, wherein the second substrate (120) includes a counter electrode (124), the counter electrode comprising a further transparent conductive layer (121), a catalyst layer (122) on the transparent conductive layer and counter electrode fingers (123) on the catalyst layer.

9. The photoelectric device of claim 8, comprising a further protective layer (125) over the counter electrode fingers (123), wherein the further protective layer is arranged to cover each of the counter electrode fingers (123) in a photoelectric conversion region and in a sealing region, wherein the further protective layer is arranged in the sealing region to cover the counter electrode fingers and the catalyst layer between the counter electrode fingers to form a substantially flat surface for receiving the sealing layer (130).

10. The photoelectric device of claim 9, wherein the further protective layer is arranged in the photoelectric conversion region to cover the counter electrode fingers with a continuous film such that the counter electrode fingers and the further protective layer over each of the counter electrode fingers provide a plurality of protrusions on the catalyst layer.

11. The photoelectric device of claim 9, wherein the further protective layer is arranged in the photoelectric conversion region to cover the counter electrode fingers discontinuously such that the catalyst layer is exposed between the counter electrode fingers.

12. The photoelectric device of any one of the preceding claims, wherein the electrode fingers (113) are connected to a common electrode (116) that extends in a direction that is substantially perpendicular to the direction in which the electrode fingers extend.

13. The photoelectric device of claim 12, wherein the common electrode is arranged in a peripheral region on a side of the sealing layer (130) opposite the photoelectric conversion region and extends into the sealing region.

14. The photoelectric device of claim 13, wherein a terminal portion (116a) of the common electrode (116) is exposed in the peripheral region to contact an external apparatus.

15. The photoelectric device of any one of claims 7 to 14, when dependent on claim 7, wherein each of the first and second substrates are transparent.

## Patentansprüche

1. Lichtelektrische Vorrichtung, umfassend:
ein Substrat (110);
eine Photoelektrode (114) auf dem Substrat (110), wobei die Photoelektrode eine transparente leitende Schicht (111) und eine Vielzahl von über die transparente leitende Schicht beabstandeten Elektrodenfingern (113) umfasst;
eine die Elektrodenfinger (113) in einem Versiegelungsbereich und in einem lichtelektrischen Umwandlungsbereich bedeckende Schutzschicht (115); und
eine Versiegelungsschicht (130) auf der Schutzschicht in dem Versiegelungsbereich;
wobei die Schutzschicht (115) im Versiegelungsbereich so angeordnet ist, dass sie die Elektrodenfinger und die transparente leitende Schicht zwischen den Elektrodenfingern bedeckt, um eine im Wesentlichen flache Oberfläche zur Aufnahme der Versiegelungsschicht (130) auszubilden.

2. Lichtelektrische Vorrichtung nach Anspruch 1, wobei die Schutzschicht (115) in dem lichtelektrischen Umwandlungsbereich so angeordnet ist, dass sie jeden der Elektrodenfinger (113) derart bedeckt, dass die Elektrodenfinger und die Schutzschicht über jedem der Finger eine Vielzahl von Vorsprüngen auf der transparenten leitenden Schicht bereitstellen.

3. Lichtelektrische Vorrichtung nach Anspruch 1 oder 2, wobei die Schutzschicht (115) in dem lichtelektrischen Umwandlungsbereich so angeordnet ist, dass sie jeden der Elektrodenfinger (113) nicht durchgehend derart bedeckt, dass die transparente leitende Schicht zwischen den Elektrodenfingern freiliegt.

4. Lichtelektrische Vorrichtung nach Anspruch 1, 2 oder 3, wobei die Versiegelungsschicht um einen Umfang des lichtelektrischen Umwandlungsbereichs angeordnet ist.

5. Lichtelektrische Vorrichtung nach einem der vorstehenden Ansprüche, ferner umfassend eine Halbleiterschicht (117) über der Schutzschicht (115) im lichtelektrischen Umwandlungsbereich.

6. Lichtelektrische Vorrichtung nach Anspruch 5, wobei die Halbleiterschicht einen lichtempfindlichen Farbstoff aufweist.

7. Lichtelektrische Vorrichtung nach einem der vorstehenden Ansprüche, wobei das Substrat (110) ein erstes Substrat umfasst, ferner umfassend:
ein dem ersten Substrat zugewandtes zweites Substrat (120), wobei die Versiegelungsschicht zum Versiegeln eines Elektrolyts zwischen den Substraten angeordnet ist.

8. Lichtelektrische Vorrichtung nach Anspruch 7, wobei das zweite Substrat (120) eine Gegenelektrode (124) umfasst, wobei die Gegenelektrode eine weitere transparente leitende Schicht (121), eine Katalysatorschicht (122) auf der transparenten leitenden Schicht und Gegenelektrodenfinger (123) auf der Katalysatorschicht umfasst.

9. Lichtelektrische Vorrichtung nach Anspruch 8, umfassend eine weitere Schutzschicht (125) über den Gegenelektrodenfingern (123), wobei die weitere Schutzschicht so angeordnet ist, dass sie jeden der Gegenelektrodenfinger (123) in einem lichtelektrischen Umwandlungsbereich und in einem Versiegelungsbereich bedeckt, wobei die weitere Schutzschicht im Versiegelungsbereich so angeordnet ist, dass sie die Gegenelektrodenfinger und die Katalysatorschicht zwischen den Gegenelektrodenfingern bedeckt, um eine im Wesentlichen flache Oberfläche zur Aufnahme der Versiegelungsschicht (130) auszubilden.

10. Lichtelektrische Vorrichtung nach Anspruch 9, wobei die weitere Schutzschicht in dem lichtelektrischen Umwandlungsbereich so angeordnet ist, dass sie die Gegenelektrodenfinger mit einem durchgehenden Film derart bedeckt, dass die Gegenelektrodenfinger und die weitere Schutzschicht über jedem der Gegenelektrodenfinger eine Vielzahl von Vorsprüngen auf der Katalysatorschicht bereitstellen.

11. Lichtelektrische Vorrichtung nach Anspruch 9, wobei die weitere Schutzschicht in dem lichtelektrischen Umwandlungsbereich so angeordnet ist, dass sie die Gegenelektrodenfinger nicht durchgehend derart bedeckt, dass die Katalysatorschicht zwischen den Gegenelektrodenfingern freiliegt.

12. Lichtelektrische Vorrichtung nach einem der vorstehenden Ansprüche, wobei die Elektrodenfinger (113) mit einer gemeinsamen Elektrode (116) verbunden sind, die sich in eine Richtung erstreckt, die im Wesentlichen senkrecht zu der Richtung ist, in welcher sich die Elektrodenfinger erstrecken.

13. Lichtelektrische Vorrichtung nach Anspruch 12, wobei die gemeinsame Elektrode in einem Umfangsbereich auf einer Seite der dem lichtelektrischen Umwandlungsbereich gegenüberliegenden Versiegelungsschicht (130) angeordnet ist und sich in den Versiegelungsbereich hinein erstreckt.

14. Lichtelektrische Vorrichtung nach Anspruch 13, wobei ein Anschlussabschnitt (116a) der gemeinsamen Elektrode (116) im Umfangsbereich zur Kontaktierung eines externen Geräts freiliegt.

15. Lichtelektrische Vorrichtung nach einem der Ansprüche 7 bis 14, wenn von Anspruch 7 abhängig, wobei jedes der ersten und zweiten Substrate transparent ist.

## Revendications

1. Dispositif photoélectrique comprenant :
un substrat (110) ;
une électrode photoélectrique (114) sur le substrat (110), l'électrode photoélectrique comprenant une couche conductrice transparente (111) et une pluralité de doigts d'électrode (113) espacés dans la couche conductrice transparente ;
une couche protectrice (115) couvrant les doigts d'électrode (113) dans une région étanche et dans une région de conversion photoélectrique ; et
une couche (130) d'étanchéité sur la couche protectrice dans la région étanche,
dans lequel la couche protectrice (115) est agencée dans la région étanche pour couvrir les doigts d'électrode et la couche conductrice transparente entre les doigts d'électrode pour former une surface pratiquement plate destinée à recevoir la couche (130) d'étanchéité.

2. Dispositif photoélectrique selon la revendication 1, dans lequel la couche protectrice (115) est agencée dans la région de conversion photoélectrique pour couvrir chacun des doigts d'électrode (113) de façon que les doigts d'électrode et la couche protectrice sur chacun des doigts créent une pluralité de protubérances sur la couche conductrice transparente.

3. Dispositif photoélectrique selon la revendication 1 ou 2, dans lequel la couche protectrice (115) est agencée dans la région de conversion photoélectrique pour couvrir de façon discontinue chacun des doigts d'électrode de façon que la couche conductrice transparente soit à nu entre les doigts d'électrode.

4. Dispositif photoélectrique selon la revendication 1, 2 ou 3, dans lequel la couche d'étanchéité est agencée autour de la périphérie de la région de conversion photoélectrique.

5. Dispositif photoélectrique selon l'une quelconque des revendications précédentes, comprenant en outre une couche semi-conductrice (117) sur la couche protectrice (115) dans la région de conversion photoélectrique.

6. Dispositif photoélectrique selon la revendication 5, dans lequel la couche semi-conductrice inclut un colorant photosensible.

7. Dispositif photoélectrique selon l'une quelconque des revendications précédentes, dans lequel le substrat (110) comprend un premier substrat, comprenant en outre :
un second substrat (120) faisant face au premier substrat, dans lequel la couche d'étanchéité est agencée pour enfermer de façon étanche un électrolyte entre les substrats.

8. Dispositif photoélectrique selon la revendication 7, dans lequel le second substrat (120) inclut une contre-électrode (124), la contre-électrode comprenant une autre couche conductrice transparente (121), une couche de catalyseur (122) sur la couche conductrice transparente et des doigts de contre-électrode (123) sur la couche de catalyseur.

9. Dispositif photoélectrique selon la revendication 8, comprenant une autre couche protectrice (125) sur les doigts de contre-électrode (123), dans lequel l'autre couche protectrice est agencée pour couvrir chacun des doigts de contre-électrode (123) dans une région de conversion photoélectrique et dans une région étanche, dans lequel l'autre couche protectrice est agencée dans la région étanche pour couvrir les doigts de contre-électrode et la couche de catalyseur entre les doigts de contre-électrode pour former une surface pratiquement plate destinée à recevoir la couche (130) d'étanchéité.

10. Dispositif photoélectrique selon la revendication 9, dans lequel l'autre couche protectrice est agencée dans la région de conversion photoélectrique pour couvrir les doigts de contre-électrode à l'aide d'un film continu de façon que les doigts de contre-électrode et l'autre couche protectrice sur chacun des doigts de contre-électrode créent une pluralité de protubérances sur la couche de catalyseur.

11. Dispositif photoélectrique selon la revendication 9, dans lequel l'autre couche protectrice est agencée dans la région de conversion photoélectrique pour couvrir les doigts de contre-électrode de manière discontinue de façon que la couche de catalyseur soit à nu entre les doigts de contre-électrode.

12. Dispositif photoélectrique selon l'une quelconque des revendications précédentes, dans lequel les doigts d'électrode (113) sont connectés à une électrode commune (116) qui s'étend dans une direction qui est pratiquement perpendiculaire à la direction dans laquelle s'étendent les doigts d'électrode.

13. Dispositif photoélectrique selon la revendication 12, dans lequel l'électrode commune est agencée dans une région périphérique sur un côté de la couche (130) d'étanchéité opposé à la région de conversion photoélectrique et s'étend dans la région étanche.

14. Dispositif photoélectrique selon la revendication 13, dans lequel une partie formant borne (116a) de l'électrode commune (116) est à nu dans la région périphérique pour contacter un appareil externe.

15. Dispositif photoélectrique selon l'une quelconque des revendications 7 à 14, lorsqu'elles dépendent de la revendication 7, dans lequel chacun des premier et second substrats est transparent.
